# EUROPEAN PATENT SPECIFICATION

(11) **EP 1 750 926 B1**
(45) Date of publication and mention of the grant of the patent: **08.10.2008**
(21) Application number: 05731953.5
(22) Date of filing: 08.04.2005
(51) Int. Cl.: B29C 65/42, B63B 5/06, B27G 11/00, B08B 7/00, B05C 5/02

(54) **METHOD FOR SEALING GAPS**
VERFAHREN ZUM ABDICHTEN VON SPALTEN
PROCÉDÉ POUR ETANCHEIFICATION DE FENTES

(30) Priority: 08.04.2004 EP 04101462
(43) Date of publication of application: 14.02.2007
(73) Proprietor: Arizona Chemical B.V., 1322 CE Almere (NL)
(72) Inventor: SMELIK, Gerrit, NL-1621 BS Hoorn (NL)
(74) Representative: Beetz, Tom
(86) International application number: PCT/EP2005/051561
(87) International publication number: WO 2005/097473

(56) References cited:
- EP-A- 0 240 298
- EP-A- 0 552 510
- EP-A- 0 775 460
- EP-A- 0 842 747
- EP-A- 1 378 332
- WO-A-01/60533
- DE-A- 19 532 598
- DE-A1- 2 438 113
- FR-A- 1 350 109
- FR-A- 2 734 179
- US-A- 4 484 976

## Description

The invention relates to a method of sealing gaps between two adjacent wooden, cork or plastic members, a method of removing seals from the gaps and a method of repairing the seals in the gaps. The invention further relates to a device for sealing said gaps and to a deck of a boat comprising said sealed gaps.

Methods of sealing gaps are known in the art, for instance as disclosed in EP 0 240 298. According to this method, joints are sealed against atmospheric agents, such as water, and are particularly suitable for sealing joints between adjacent planks of a wooden deck. The method prescribes a resilient thermoplastic bead for sealing a gap between two adjacent members. Those "beads" are thermoplastic solid strips of a size that fit into the gap. After bringing the bead into the gap, the material of the bead is heated to render it fluid and to make it adhere to the facing edges (walls) of the adjacent members creating a seal.

In EP 0775460 a floor covering system comprising a hot melt material wherein the edge portions of elements are being bonded together with a layer consisting of the hot-melt material. The hot-melt material is an ethylene-vinyl acetate copolymer. Other materials are also mentioned, among which polyamides of undefined type, but the polyamides tried had only moderate success. This patent application also concerns a different field of application, i.e. the closing of seams in floor elements to prevent dirt, spills-and cleaning solutions from penetrating into the seam, not preventing weather conditions to deteriorate the hot melt material, nor providing a fluid-tight seam as is the application of the present inventions.

In FR 1350109 a method for filling gaps of a deck of a boat is disclosed. The method is different for the presently claimed invention. Profiles or elastic elements of various materials (such as braids of polyamide textiles) are brought onto the bottom of the joint which is then filled with a vulcanisable paste of the siloxane or silane type, which does not adhere to the profile or element. The watertight seal is thus obtained by using a organopoly-siloxane, and the profile is used to prevent cracking and tearing apart these seals. This method is incomparable with the method of the present invention and does not give the advantages of a simple method of sealing gaps, removing those seals, and repairing those seals when damaged.

As commonly known, weather conditions, among which for instance sunlight, deteriorate plastic material after a period of time, thereby damaging seals. Especially exposure to sunlight for long periods of time is harmful for seals that are more or less continuously exposed thereto, such as is the case for decks of ships, and which seals should remain watertight. Further water, and particularly sea water affects the seals after a period of time. For ship decks seals have therefore to be replaced regularly. Replacing a seal means performing the process of removing the seal, thoroughly cleaning the gap of all remaining sealant parts and particles and bringing a fresh thermoplastic bead into the gap. If the cleaning of the gap is not performed thoroughly, the adhesion of fresh sealing material will be hampered at sites of the gap where old sealing material has remained. However, thorough cleaning is time consuming due to adherence of the old seal to the walls of the gap, and therefore expensive.

The present invention has to its objective to provide a simple and cheap method of sealing gaps between two adjacent members without the need of thoroughly removing old parts of sealing materials for offering good adhesion. It would further be advantageous if the invention were not restricted to a strip with predetermined size, such that gaps with irregular shapes can easily be filled. The non-requirement of strips having a predetermined size also facilitates the repair of a damaged seal. The sealant material should be resistant to weather conditions and water, and it should be easy to sand.

Above objectives were attained by using a novel method. To this end the invention pertains to a method of sealing a gap between two adjacent members selected from wood and cork, said gap having walls and a bottom comprising the steps of:
a. melting a polyamide composition having a softening point above 80° C,
b. filling the gap with the molten polyamide composition,
c. solidifying the polyamide composition, thereby forming a seal between the two adjacent members.

The softening point of the polyamide composition should be above 80° C to ensure that the composition does not becomes soft in sunlight. Preferably the members are of wood.

Although generally good results are obtained using this method, sometimes pores are formed in the seals, decreasing their aesthetic appearance and possibly decreasing their resistance to environmental conditions. This phenomenon was particularly found when wooden members were used. It is believed that pore development is the result of formation of gaseous water (steam) from moisture contained in the member, which is vaporized by contact with the hot polyamide composition. This phenomenon may further have a negative influence on the strength of the seal, for instance by enhancing crack formation in the seal. It was found that this phenomenon could fully be suppressed by adapting the step of filling of the gap with the molten polyamide composition as follows:
b1. coating at least one of the walls of the gap with polyamide composition creating a coated wall and a remaining gap, and thereafter
b2. filling the remaining gap with polyamide composition.

Coating one of the walls of the gap, prior to filling the gap completely, prevents the formation of gaseous moisture bubbles and their release from the members into the polyamide composition and no pore formation thus occurs. After having coated the walls the remaining gap (i.e. the gap minus the coated walls) is filled.

A high temperature of the polyamide composition during coating the wall of the gap enhances the adhesion of the polyamide composition to the member. A temperature of the polyamide composition during coating well above the softening point of said composition is desired. Preferably, the temperature during coating is above 140° C, more preferably between 150 and 195° C.

When filling the remaining gap, the temperature of the molten polyamide composition should be high enough to fuse with the coating, but not too high that it completely melts said coating. Preferably, the temperature of the polyamide composition during filling the remaining gap is lower than the temperature of the polyamide composition during coating. More preferably, the temperature of the polyamide composition during filling the remaining gap is between 110 and 190° C, most preferably between 115 and 175° C.

In practice, it is difficult to use the precise amount of polyamide to fully fill the gap or remaining gap. Thus it is inevitable to apply more polyamide than required for filling the gap. When the excess of molten polyamide comes into contact with uncovered parts of the members, again water can be released from the member as to form gaseous bubbles in the seal. To prevent this undesired contact not only the wall but also the upper edge of the wall is coated with polyamide prior to filling the remaining gap. Thus in a preferred embodiment the polyamide composition protrudes over an upper edge of the wall.

After having filled the remaining gap with polyamide composition, the seal can be finished by removing the protruding parts of solidified composition from the gap. Preferably, such removing is performed by cutting off the excess polyamide with a cutting device having a temperature above the softening point of the polyamide. The temperature of the cutting device preferably is between 200 and 250° C. Optionally, the seal is sanded, which can be performed by any method known in the art.

It was further found that the smoothness of the sanded surface could be enhanced by adding graphite powder to the polyamide composition, improving the sandability considerably. Furthermore, it gives the seal a black color and thereby a more authentic look. To obtain optimum sandability properties the quantity of graphite powder is preferably less than 30 wt.%. When graphite content is higher than 30 wt.%, adhesion properties of the composition are insufficient to provide acceptable seals. More preferably, 1-10 wt.% of graphite powder are used. Most preferably, 4 to 6 wt.% of graphite powder are used.

Since the wooden members of the deck of a boat and the seal have different coefficients of expansion they will work on each other, which may damage the seal. It is therefore preferred to provide the bottom of the gap with means for preventing adhesion of the polyamide composition to the bottom, which diminishes the work force in the lateral direction. This can, for instance, be attained by applying a strip of anti-adhesive material to the bottom of the gap.

Regularly seals have to be renewed, often after about five years. According to the prior art such removal is a cumbersome process, necessitating complete removal of old seal. The seal of the present invention allows a simplified removal process. This removal is based on the same concept as making the seal, but now the reverse process is followed. To this end a suitable method for removing the seal from a gap comprises the steps of:
a. heating at least a part of the seal above the softening point of the polyamide composition,
b. removing molten polyamide composition from the gap.

The removal of the seal is preferably performed by gouging the polyamide composition from the gap using a cutting device, which is heated above the softening point of the polyamide composition. The cutting device is preferably heated to a temperature between 200 and 250° C. Preferably, the cutting device has the width of the sealed gap as to be able to remove as much as possible of the seal at once, preferably all of the seal. Remaining parts or particles of the seal do not have to be removed thoroughly, since the introduction of a fresh molten polyamide composition into the gap for making a fresh seal will result in melting old seal particles and will incorporate them into the fresh seal.

When seals according to the prior art are damaged, the complete seal, or at least a substantial part thereof, has to be removed and replaced. The use of the seal of the invention avoids total replacing thereof. The method of repairing is thus based on the same concept as making a complete seal, but now the method of the invention is only applied to the damaged part of the seal rather than to the whole gap. Thus seals of the invention can be repaired by:
a. optionally, heating the polyamide composition of the seal above its softening point,
b. filling the damaged part of the seal with molten polyamide composition,
c. solidifying the polyamide composition,
d. optionally, cutting off protruding solidified polyamide composition and/or sanding the polyamide composition.

If necessary, also non-damaged parts of the seal around the damaged site can be removed to facilitate the repair of the seal.

The polyamides that can be used in the compositions for seals of the invention are the common polyamides that are commercially available and known to the skilled person. In the context of this invention the term "polyamide" relates to any polymer comprising amide (-CO-NH-) bonds. Particularly useful are thermoplastic hot melt polyamide adhesives designed to bond to a wide variety of substrates and which provide high performance solutions to product assembly applications. Such polyamide can, for instance, be purchased at commercial firms such as Arizona Chemicals, USA. For instance the polyamides series with the trade name Uni-Rez^{®} (such as Uni-Rez^{®} 2645) are very suitable as ingredient for the claimed sealant material.

The invention further pertains to a device, which can coat a wall of a gap and fill the remaining gap as to seal the gap, and which inventive concept is the direct result of the method of the invention. The device comprises at least a first and a second nozzle head for supplying polyamide composition, the first nozzle head comprising at least one nozzle, which during use, is directed to a wall of the gap so as to coat with polyamide composition, and the second nozzle head being positioned at a distance from the first nozzle head and comprising at least one nozzle for filling the remaining gap with polyamide composition. In a preferred embodiment the first nozzle head of the device can expel a polyamide composition at a higher temperature than the second nozzle head. To this end polyamide composition is tapped off from the stream of polyamide composition which is led to the second nozzle head and the tapped off stream is heated in or at the first nozzle head to the preferred higher temperature.

Preferably the device further comprises a guiding element for maintaining the first nozzle head in lateral position, the width of the guiding element corresponding to the width of the gap.

The invention also pertains to a deck of a boat having wooden, cork or plastic members comprising gaps between two adjacent members, the gaps containing seals comprising a polyamide composition.

The invention will now be explained in more detail with reference to the drawings, which shows as an example a part of a wooden deck of a boat.

Figures Ia-d show three phases of the filling process of the gap, respectively (Ia) an unfilled gap between two adjacent wooden members (in this case planks on the deck), (Ib) a remaining gap with coated wooden walls, (Ic) a detail of coating on a wall and (Id) a filled gap creating a seal.

Figure II shows schematically a device for filling the gap in the wooden deck.

Figure III shows schematically a top view (IIIa) and side view (IIIb) of a first nozzle head.

Figure IV shows schematically a side view (IVa) and top view (IVb) of another nozzle head including springy elements.

In Figure Ia an embodiment with gap 4 which is to be sealed with a polyamide composition, walls 3 and a bottom 2 between two adjacent wooden planks 1b,1b, are shown.

Figure Ib shows an embodiment wherein the walls 3a,3b of the gap 4 are coated with the polyamide composition 6 to prevent pores forming in the solidified polyamide. Between these coated walls the remaining gap 5 is formed.

Figure Ic shows a detail of Figure Ib wherein the cross-section of the coating 6 on the wall 3b has a protrusion 7 over the upper edge 8 of the wall 3b.

Figure Id shows the seal 8 in the deck of the boat after filling the remaining gap 5 with polyamide composition.

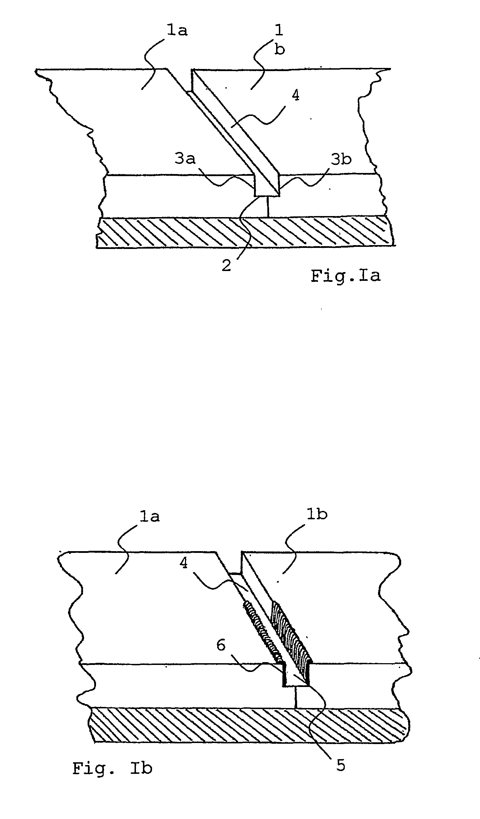

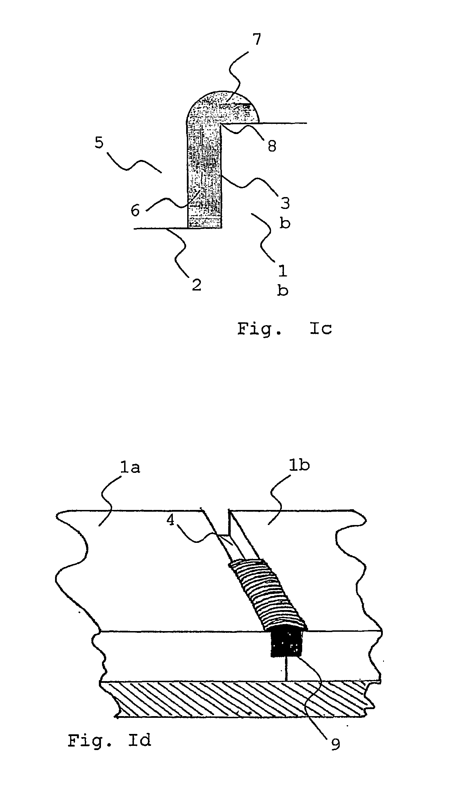

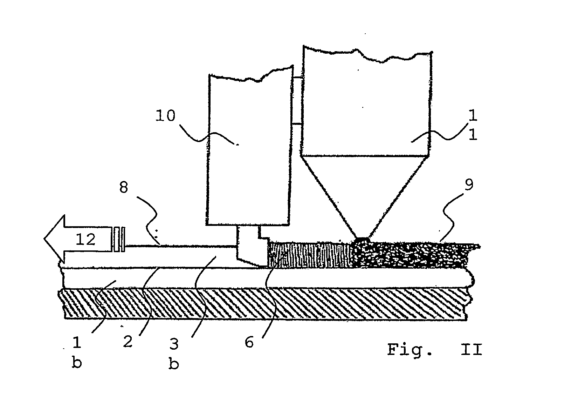

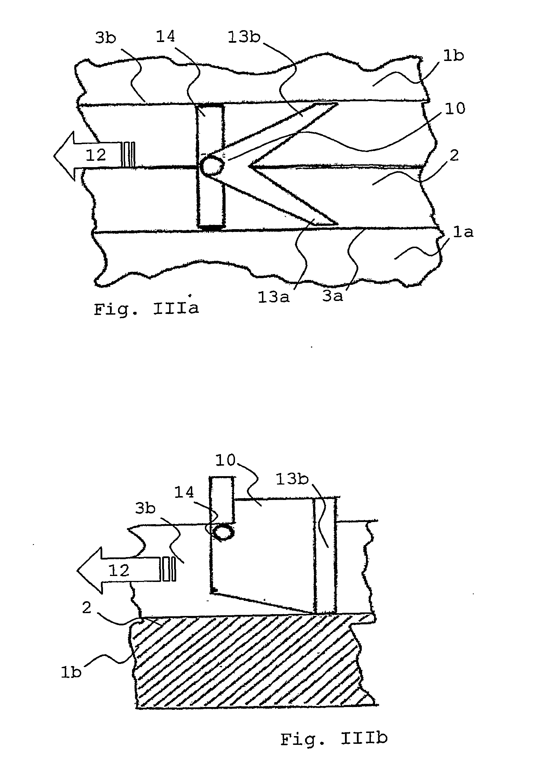

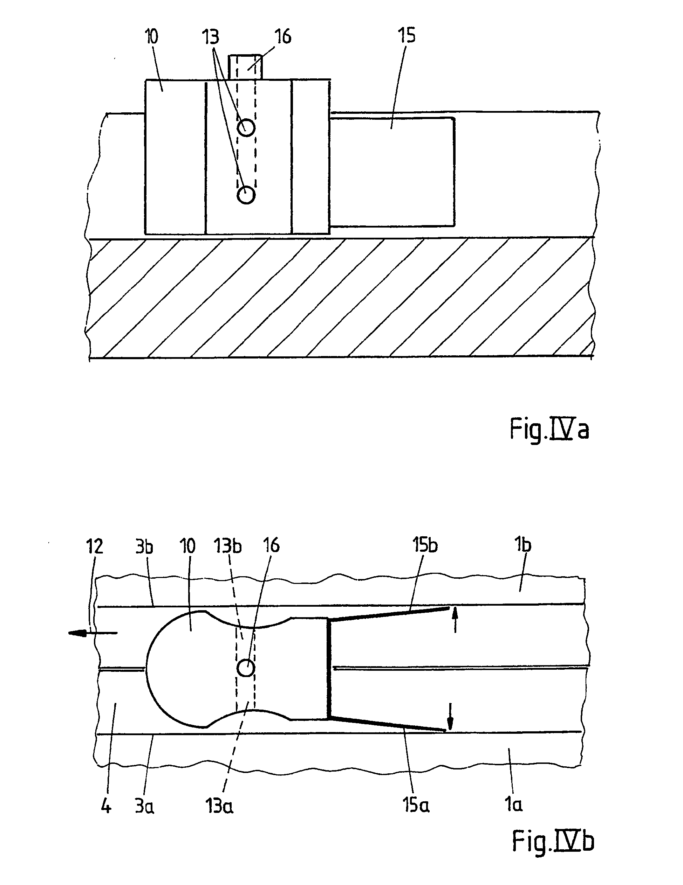

In figure II an embodiment of a device is shown, which is capable of sealing the gap as shown in figures Ia-d. The direction of the movement of the device is indicated in the figure by a thick arrow 12. The device comprises two nozzle heads 10,11. The first nozzle head 10 forms a coating 6 on the wall 3b of the gap 4 and the second nozzle head 11 fills the remaining gap 5 between the walls 3a,3b provided with a coating 6 to form a seal 9.

Figure III shows the first nozzle head 10 with the thick arrow 12 showing the direction of movement. The nozzle head 10 comprises nozzles 13a,13b that are directed to the walls 3a,3b of the gap 4 for applying a polyamide composition thereon. The first nozzle head is maintained in lateral position during movement along the gap 4 by a guiding element 14 having the width of the gap 4 and which is attached to the first nozzle head 10.

A further improvement is showed in Fig. IV. In this embodiment the guiding element is not necessary and can be omitted. Nozzles 13a,13b are directed to the walls 3a,3b of the gap 4 for applying a polyamide composition thereon. The nozzle head 10 may be oval shaped, or having any other shape that is suitable. The nozzle head is provided with an inlet 16 for introducing the hot polyamide into the head. Springy elements 15a,15b are mounted on the nozzle head, which elements, which may be small plates, are independently from each other pushed against the wall (small arrows) by using a spring element (not shown) to smear the extruded polyamide material against the wall of the gap. Such elements further improve adhesion to the wall, thereby allowing using lower temperatures and diminishing the occurrence of air bubbles.

## Claims

1. A method of sealing a gap between two adjacent members selected from wood and cork, said gap having walls and a bottom comprising the steps of:
a. melting a polyamide composition having a softening point above 80 °C,
b. filling the gap with the molten polyamide composition,
c. solidifying the polyamide composition, thereby forming a seal between the two adjacent members.

2. The method according to claim 1, wherein the filling of the gap comprises:
b1. coating at least one of the walls of the gap with polyamide composition creating a coated wall and a remaining gap, and thereafter
b2. filling the remaining gap with polyamide composition.

3. The method according to claim 2, wherein said wall is coated such that the composition protrudes over an upper edge of the wall.

4. The method according to claim 3, wherein the solidified composition that protrudes from the gap is removed.

5. The method according to claim 4, wherein the solidified composition that protrudes from the gap is removed by cutting it off with a cutting device having a temperature above the softening point of the polyamide, and optionally sanding the seal.

6. The method according to any one of the preceding claims, wherein a composition of polyamide and graphite is used.

7. The method according to any one of the preceding claims, wherein prior to filling the gap with the polyamide composition, the bottom of the gap is provided with means for preventing adhesion of the polyamide composition to the bottom of the gap, preferably with a strip of anti-adhesive material.

8. The method of sealing a gap according to any one of claims 1-7, followed by a method of removing the seal comprising the steps of:
a. heating at least a part of the seal above the softening point of the polyamide composition,
b. removing molten polyamide composition from the gap.

9. The method according to claim 8, wherein the seal is removed with a cutting device, which is heated above the softening point of the polyamide composition.

10. The method of sealing a gap according to any one of claims 1-7, followed by a method of repairing if such seal is damaged, comprising the steps:
a. optionally, heating the polyamide composition of the seal above its softening point,
b. filling the damaged part of the seal with molten polyamide composition,
c. solidifying the polyamide composition,
d. optionally, cutting off protruding solidified polyamide composition and/or sanding the polyamide composition.

11. The method of sealing a gap according to any one of claims 1-7, employing a device for using in said method comprising at least a first and a second nozzle head for supplying polyamide composition, the first nozzle head comprising at least one nozzle, which, during use, is directed to a wall of the gap so as to coat the wall with polyamide composition, and the second nozzle head being positioned at a distance from the first nozzle head and comprising at least one nozzle for filling the remaining gap with polyamide composition.

12. The method of sealing a gap according to claims 11 wherein the device comprises a guiding element for maintaining the first nozzle head in lateral position and wherein the width of the guiding element corresponds to the width of the gap.

13. The method of sealing a gap according to claim 11 or 12 wherein the device comprises at least one nozzle head for supplying polyamide composition into a gap, which comprises at least springy elements, which, during use, are directed to a wall of the gap so as to smear the polyamide composition from the nozzle head against the wall.

14. The method according to any one of claims 1-7 for sealing a deck of a boat.

## Patentansprüche

1. Verfahren zum Abdichten einer Lücke zwischen zwei benachbarten Elementen, die aus Holz und Kork ausgewählt sind, wobei die Lücke Wände und einen Boden aufweist, umfassend die Schritte:
a. Schmelzen einer Polyamidzusammensetzung, die einen Erweichungspunkt über 80°C aufweist,
b. Füllen der Lücke mit der geschmolzenen Polyamidzusammensetzung,
c. Verfestigen der Polyamidzusammensetzung, wodurch eine Abdichtung zwischen den zwei benachbarten Elementen ausgebildet wird.

2. Verfahren nach Anspruch 1, bei dem das Füllen der Lücke umfasst:
b1. Beschichten wenigstens eine der Wände der Lücke mit einer Polyamidzusammensetzung, wodurch eine beschichtete Wand und eine verbleibende Lücke erzeugt werden, und danach
b2. Füllen der verbleibenden Lücke mit einer Polyamidzusammensetzung.

3. Verfahren nach Anspruch 2, bei dem die Wand so beschichtet wird, dass die Zusammensetzung über eine obere Kante der Wand hervorsteht.

4. Verfahren nach Anspruch 3, bei dem die verfestigte Zusammensetzung, die von der Lücke hervorsteht, entfernt wird.

5. Verfahren nach Anspruch 4, bei dem die verfestigte Zusammensetzung, die von der Lücke hervorsteht, durch Abschneiden mit einer Schneidevorrichtung, die eine Temperatur über dem Erweichungspunkt des Polyamids aufweist, und optional Abschmirgeln der Abdichtung entfernt wird.

6. Verfahren nach einem der vorhergehenden Ansprüche, bei dem eine Zusammensetzung von Polyamid und Graphit verwendet wird.

7. Verfahren nach einem der vorhergehenden Ansprüche, bei dem vor dem Befüllen der Lücke mit der Polyamidzusammensetzung der Boden der Lücke mit Mitteln zum Verhindern einer Anhaftung der Polyamidzusammensetzung am Boden der Lücke vorgesehen wird, vorzugsweise mit einem Streifen eines nicht haftenden Materials.

8. Verfahren zum Abdichten einer Lücke nach einem der Ansprüche 1 bis 7, gefolgt von einem Verfahren zur Entfernung der Abdichtung, umfassend die Schritte:
a. Erhitzen wenigstens eines Teils der Abdichtung über den Erweichungspunkt der Polyamidzusammensetzung,
b. Entfernen von geschmolzener Polyamidzusammensetzung aus der Lücke.

9. Verfahren nach Anspruch 8, bei dem die Abdichtung mit einer Schneideinrichtung entfernt wird, die über den Erweichungspunkt der Polyamidzusammensetzung erhitzt wird.

10. Verfahren zum Abdichten einer Lücke nach einem der Ansprüche 1 bis 7, gefolgt von einem Verfahren des Reparierens, wenn eine solche Abdichtung beschädigt ist, umfassend die Schritte:
a. optional, Erhitzen der Polyamidzusammensetzung der Abdichtung über deren Erweichungspunkt,
b. Füllen des beschädigten Teils der Abdichtung mit geschmolzener Polyamidzusammensetzung,
c. Verfestigen der Polyamidzusammensetzung,
d. optional, Abschneiden der hervorstehenden verfestigten Polyamidzusammensetzung und/oder Abschmirgeln der Polyamidzusammensetzung.

11. Verfahren zum Abdichten einer Lücke nach einem der Ansprüche 1 bis 7, wobei eine Vorrichtung zur Verwendung in dem Verfahren angewendet wird, die wenigstens einen ersten und einen zweiten Düsenkopf zum Zuführen von einer Polyamidzusammensetzungen umfasst, wobei der erste Düsenkopf wenigstens eine Düse umfasst, die während der Verwendung so auf eine Wand der Lücke gerichtet ist, dass die Wand mit der Polyamidzusammensetzung beschichtet wird, und der zweite Düsenkopf in einem Abstand von dem ersten Düsenkopf angeordnet ist und wenigstens eine Düse zum Füllen der verbleibenden Lücke mit einer Polyamidzusammensetzung umfasst.

12. Verfahren zum Abdichten einer Lücke nach Anspruch 11, bei dem die Einrichtung ein Führungselement zum Beibehalten des ersten Düsenkopfs in einer seitlichen Position umfasst und bei dem die Breite des Führungselements der Breite der Lücke entspricht.

13. Verfahren zum Abdichten einer Lücke nach Anspruch 11 oder 12, bei dem die Vorrichtung wenigstens einen Düsenkopf zum Zuführen einer Polyamidzusammensetzung in eine Lücke umfasst, der wenigstens elastische Elemente umfasst, die während der Verwendung so auf eine Wand der Lücke gerichtet sind, dass die Polyamidzusammensetzung von dem Düsenkopf gegen die Wand geschmiert wird.

14. Verfahren nach einem der Ansprüche 1 bis 7, zum Abdichten eines Decks eines Boots.

## Revendications

1. Procédé pour réaliser l'étanchéité d'un espace entre deux éléments adjacents choisis parmi le bois et le liège, ledit espace ayant des parois et un fond, comprenant les étapes consistant à :
a. faire fondre une composition de polyamide ayant un point de ramollissement supérieur à 80°C,
b. remplir l'espace avec la composition de polyamide en fusion,
c. solidifier la composition de polyamide, formant ainsi un joint d'étanchéité entre les deux éléments adjacents.

2. Procédé selon la revendication 1, dans lequel le remplissage de l'espace comprend les étapes consistant à :
b1. recouvrir au moins l'une des parois de l'espace avec la composition de polyamide créant une paroi recouverte et un espace restant, et après quoi
b2. remplir l'espace restant avec la composition de polyamide.

3. Procédé selon la revendication 2, dans lequel ladite paroi est recouverte de sorte que la composition fait saillie sur un bord supérieur de la paroi.

4. Procédé selon la revendication 3, dans lequel la composition solidifiée qui fait saillie de l'espace, est retirée.

5. Procédé selon la revendication 4, dans lequel la composition solidifiée qui fait saillie de l'espace est retirée en la découpant avec un dispositif de coupe ayant une température supérieure au point de ramollissement du polyamide, et en sablant facultativement le joint d'étanchéité.

6. Procédé selon l'une quelconque des revendications précédentes, dans lequel on utilise une composition de polyamide et de graphite.

7. Procédé selon l'une quelconque des revendications précédentes, dans lequel avant de remplir l'espace avec la composition de polyamide, le fond de l'espace est doté de moyens pour empêcher l'adhérence de la composition de polyamide au fond de l'espace, de préférence avec une bande de matériau anti-adhésif.

8. Procédé pour réaliser l'étanchéité d'un espace selon l'une quelconque des revendications 1 à 7, suivi d'un procédé pour retirer le joint d'étanchéité comprenant les étapes consistant à :
a. faire chauffer au moins une partie du joint d'étanchéité au-dessus du point de ramollissement de la composition de polyamide,
b. retirer la composition de polyamide en fusion de l'espace.

9. Procédé selon la revendication 8, dans lequel le joint d'étanchéité est retiré avec un dispositif de coupe, qui est chauffé au-dessus du point de ramollissement de la composition de polyamide.

10. Procédé pour réaliser l'étanchéité d'un espace selon l'une quelconque des revendications 1 à 7, suivi par un procédé de réparation si un tel joint d'étanchéité est endommagé, comprenant les étapes consistant à :
a. facultativement, faire chauffer la composition de polyamide du joint d'étanchéité au-dessus de son point de ramollissement,
b. remplir la partie endommagée du joint d'étanchéité avec la composition de polyamide en fusion,
c. solidifier la composition de polyamide,
d. facultativement, couper la composition de polyamide solidifiée en saillie et/ou sabler la composition de polyamide.

11. Procédé pour réaliser l'étanchéité d'un espace selon l'une quelconque des revendications 1 à 7, utilisant un dispositif destiné à être utilisé dans ledit procédé, comprenant au moins une première et une seconde tête de buse pour alimenter la composition de polyamide, la première tête de buse comprenant au moins une buse qui, pendant l'utilisation est dirigée vers une paroi de l'espace afin de recouvrir la paroi avec la composition de polyamide, et la seconde tête de buse étant positionnée à une certaine distance de la première tête de buse et comprenant au moins une buse pour remplir l'espace restant avec la composition de polyamide.

12. Procédé pour réaliser l'étanchéité d'un espace selon la revendication 11, dans lequel le dispositif comprend un élément de guidage pour maintenir la première tête de buse dans la position latérale et dans lequel la largeur de l'élément de guidage correspond à la largeur de l'espace.

13. Procédé pour réaliser l'étanchéité d'un espace selon la revendication 11 ou 12, dans lequel le dispositif comprend au moins une tête de buse pour alimenter la composition de polyamide dans un espace, qui comprend au moins des éléments élastiques qui, pendant l'utilisation, sont dirigés vers une paroi de l'espace afin d'étaler la composition de polyamide, de la tête de buse contre la paroi.

14. Procédé selon l'une quelconque des revendications 1 à 7 pour réaliser l'étanchéité d'un pont d'un bateau.
